# EUROPEAN PATENT SPECIFICATION

(11) **EP 2 132 444 B1**
(45) Date of publication and mention of the grant of the patent: **26.06.2019**
(21) Application number: 07851854.5
(22) Date of filing: 16.11.2007
(51) Int. Cl.: F04D 3/02, F03B 3/04, F04D 29/18, H02K 21/14

(54) **ROTATING MACHINE FOR INTERACTION WITH A GAS OR LIQUID**
ROTATIONSMASCHINE ZUM ZUSAMMENWIRKEN MIT EINEM GAS ODER EINER FLÜSSIGKEIT
MACHINE ROTATIVE INTERAGISSANT AVEC UN GAZ OU UN LIQUIDE

(30) Priority: 16.11.2006 NL 1032875; 03.04.2007 WO PCT/NL2007/000097
(43) Date of publication of application: 16.12.2009
(73) Proprietor: Cho, Yeoung Cheol, 05336 Seoul (KR)
(72) Inventor: MIEREMET, Marinus, 3645 AN Vinkeveen (NL); BLOM, Arnold, 3081 HH Rotterdam (NL)
(74) Representative: Gritschneder, Sebastian
(86) International application number: PCT/NL2007/000287
(87) International publication number: WO 2008/060147

(56) References cited:
- BE-A2- 900 062
- CH-A- 394 814
- DE-A1- 3 638 129
- DE-A1- 4 437 972
- DE-U1- 9 111 968
- FR-A- 368 322
- GB-A- 1 368 095
- US-A- 4 720 640

## Description

The present invention relates to a rotor blade unit. The invention further relates to a fluid interaction device. The invention further relates to a power generator.

Many different types of wind turbine are known. Each of these wind turbines has its own operating principle with specific advantages. The present invention provides a different operating principle with specific advantages not available in the prior art.

BE 900 062 A2 discloses an impeller with a blade spiralling at a distance from an axis. CH 394 814 discloses a worm wheel pump that is self-bearing, having the worm wheel being self-bearing to create an opening for letting pass through fish. GB-A-1 368 095 discloses an impeller at a distance from an axis or without an axis at all for the impeller. FR 368 322 discloses a propulsion impeller for a boat having blades spiralling clearly less than one rotation around the axis.

The present invention provides for this purpose a rotor blade unit according to claim 1.

An advantage of such a rotor blade unit is that an interaction with a medium is provided wherein an energy transfer is possible in a manner which hardly disrupts the fluid flow. A suction action is for instance provided with this rotor blade unit whereby the efficiency per area is relatively high. This suction action enables an operation wherein the efficiency is maintained even at an angle with the fluid flow. The rotor blade unit is further able to orient itself automatically, even without a wind vane.

In a first preferred embodiment each rotor blade in the rotor blade unit is membrane, sheet or plate-like. A large area is hereby possible relative to the used volume provided by the blade.

In a further preferred embodiment the rotor blade unit comprises a number of rotor blades, preferably three, which are arranged together along a shared central axis at an/equal mutual angular distance relative to this central axis, wherein the blades spiral into each other with the spiral form when assembled. A greater efficiency can hereby be realized with one volume. A further advantage is that a greater stability is realized since pressure from the medium is distributed more uniformly over the periphery of the rotor blade unit.

A further aspect of the invention relates to a method for obtaining energy by means of a device according to one or more of the foregoing claims, comprising steps for:
- providing the device,
- allowing the device to interact with a fluid.

Further advantages, features and details of the present invention will be described in greater detail hereinbelow with reference to several preferred embodiments. Reference is made here to the accompanying figures, in which:

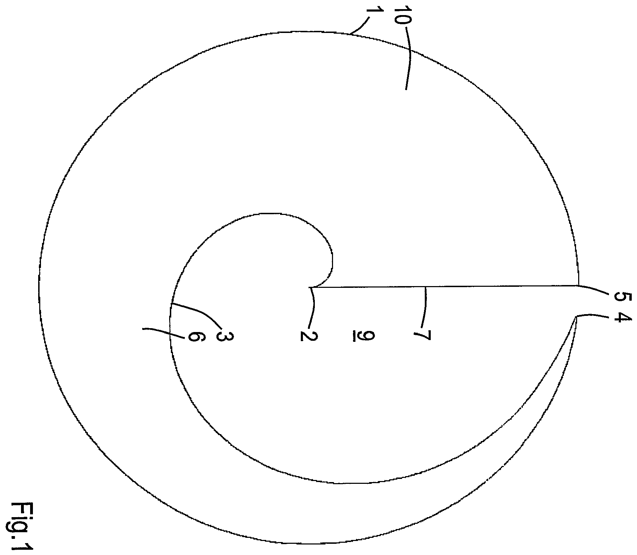

- Figure 1 is a view of an example which is not a part of the present invention;

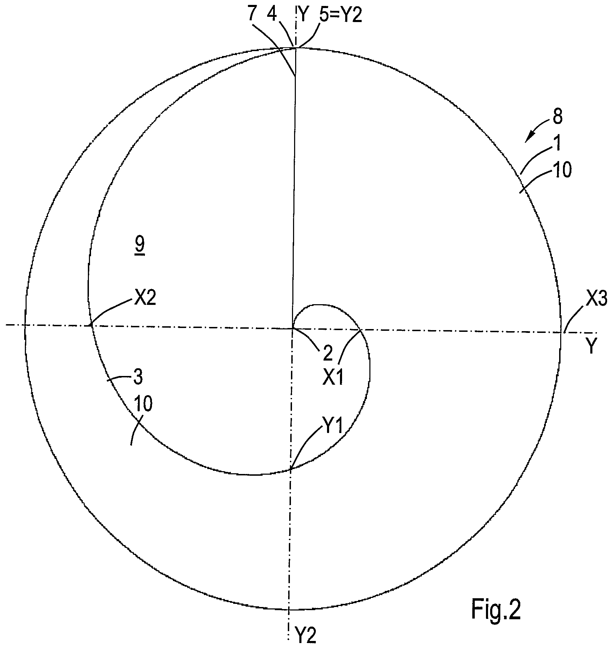

- Figure 2 is a view similar to figure 1, with indicator lines;
- Figure 3 is a schematic side view of an embodiment in a position of use;
- Figures 4A-D are different views of the embodiment of figure 2;
- Figure 5 is a perspective view of a further preferred embodiment according to the present invention;
- Figure 6 is a cut-away side view of the embodiment of figure 5;
- Figure 7 is a perspective view of a part of the embodiment of figure 5;
- Figure 8 is a front view of the embodiment of figure 5;
- Figure 9 is a schematic side view of a further preferred embodiment according to the present invention;
- Figure 10 is a schematic side view of a further preferred embodiment;
- Figure 11 is a cut-away perspective view of a further preferred embodiment according to the present invention;

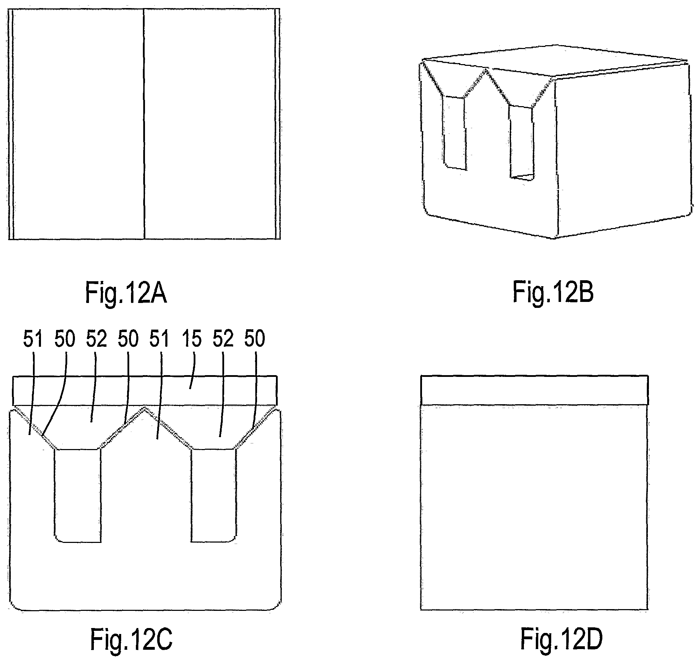

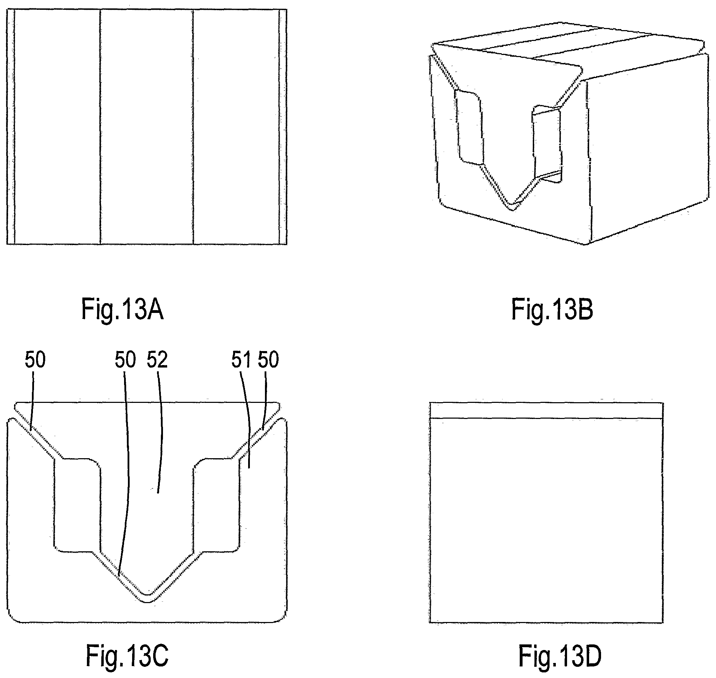

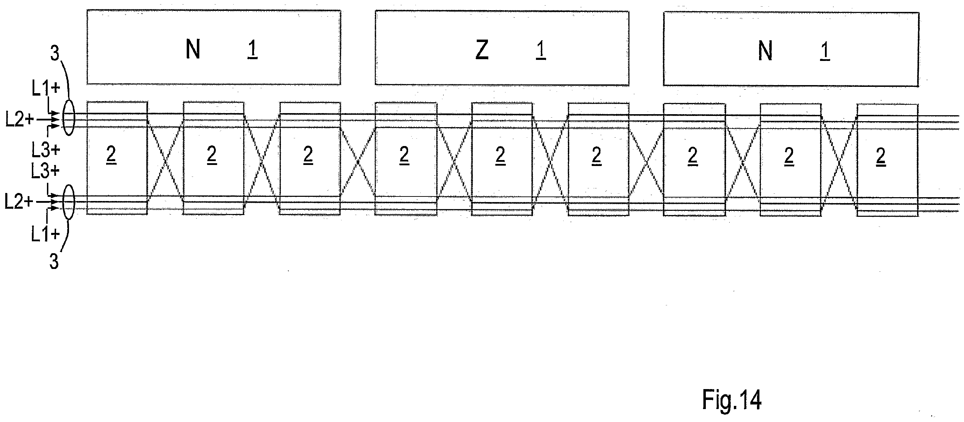

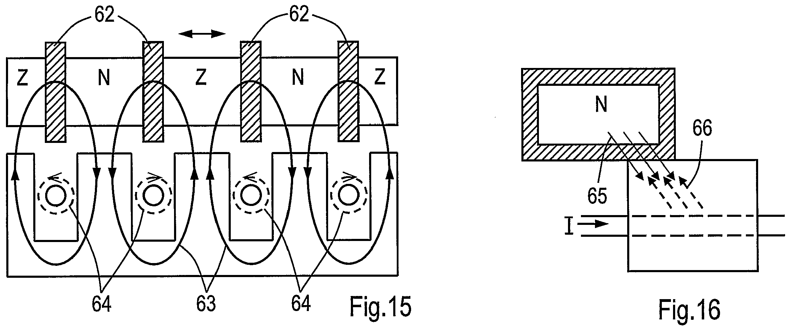

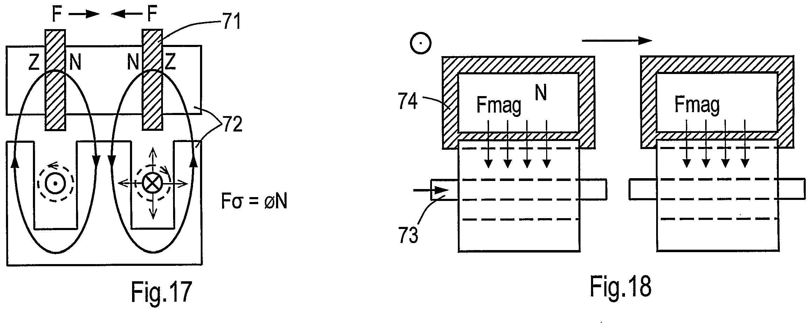

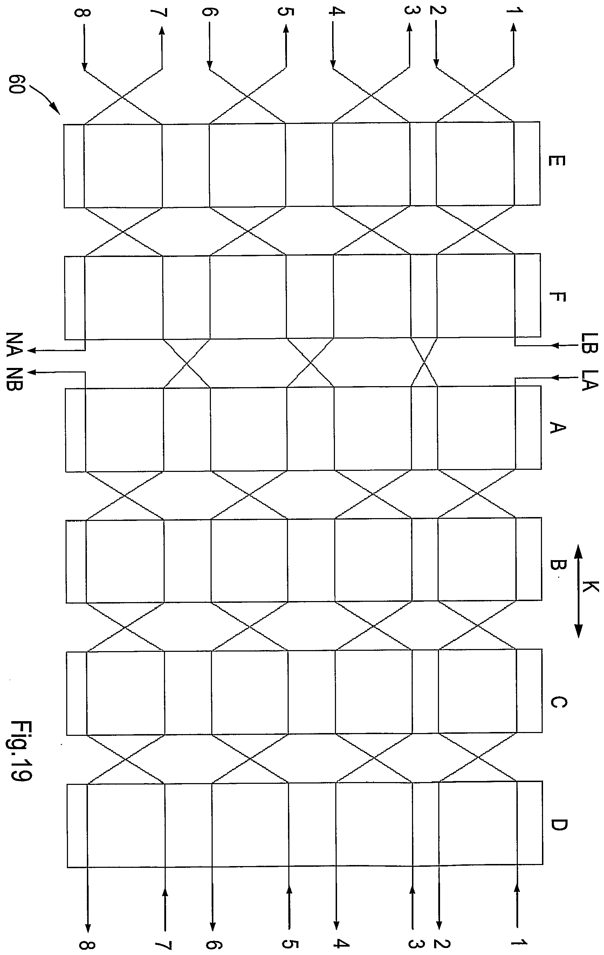

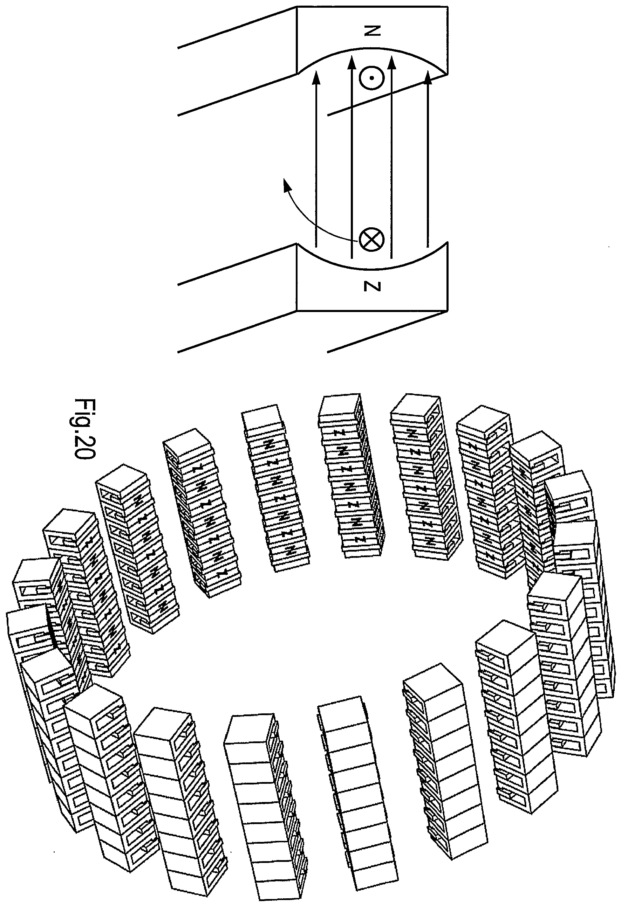

- Figures 12A-D, 13A-D and 14-20 are examples of an electric device which is not a part of the present invention.

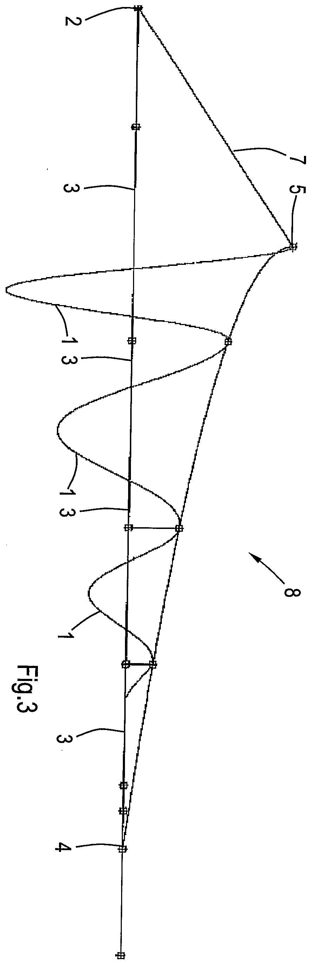

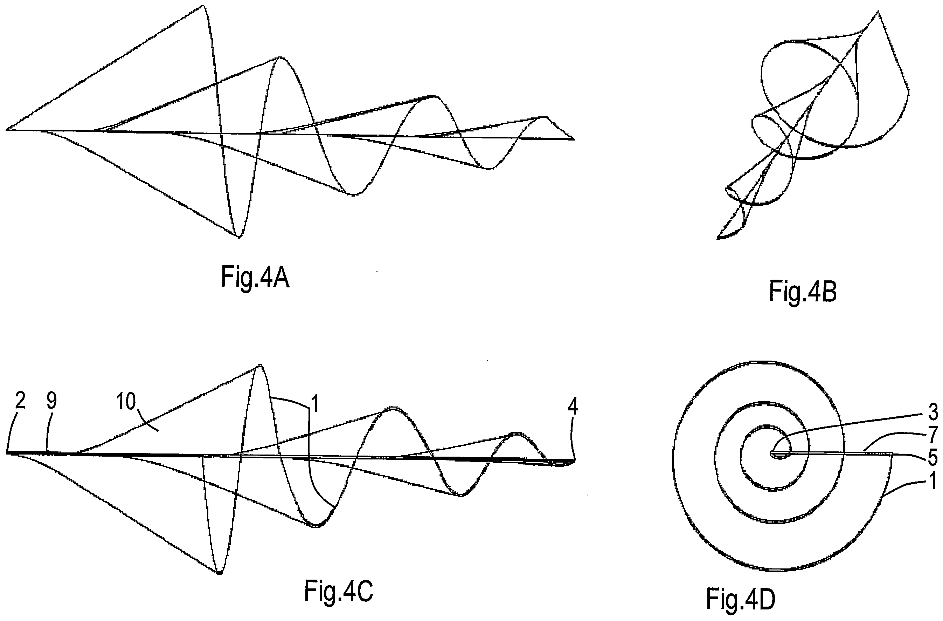

The schematic side view of figure 3 eludicates the spatial orientation of a blade unit according to an embodiment of the invention in the position of use. Edges 1, 3 and 7 are also shown in this figure 3 in order to indicate the position of these edges in the spatial form. Origin 2 is further shown as the outermost end of the blade in the spatial orientation. The other outermost point 4 is situated at the other end. Line 1 runs from point 2 to point 4. Line 7 runs from point 2 to point 5 and line 3 runs from point 2 to point 4, this as also shown in the flat plane. For the purpose of elucidating the construction of a vane blade, it is shown in four different orientations in figures 4A-4D. Figure 4A relates to a side view, as does figure 4C. The difference here is a 90° rotation around the longitudinal axis of the vane blade. Figure 4B shows a perspective view of the vane blade. Figure 4D shows a front view. This clearly shows how in this preferred embodiment the number of rotations of the vane blade around central axis 3 is slightly greater than 3. In a determined preferred embodiment the number of rotations of the frame blade round the central axis amounts to pi revolutions.

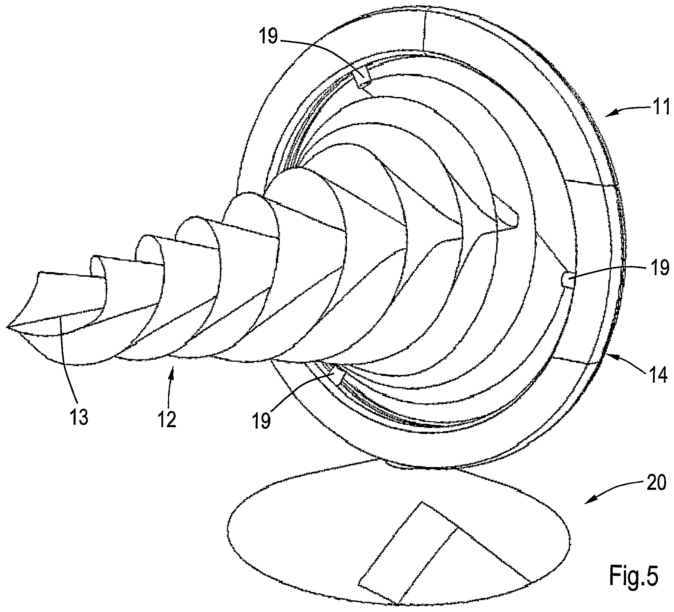

Figure 5 shows an example of an embodiment in which a vane blade as described in the foregoing is incorporated in a wind turbine. Three of these vane blades are here incorporated into this wind turbine 11, each of which are rotated 120° relative to central axis 13, which is formed by three of the edges 3 of each of the blades, for arrangement at an equal angular distance. The wind turbine is constructed around a rotor 12 which is arranged rotatably inside an outer ring 14. Forming part of the rotor is an inner ring 15 which is connected to rotor blades 16, 17 and 18 by means of fixing rods 19. The outer ring is mounted on a stand which can be constructed in many different ways. The stand serves for mounting of the whole on the ground or a building. The outer ring is mounted rotatably relative to the stand in a manner which is not shown. The skilled person will be able to propose a variety of bearing mountings for this purpose.

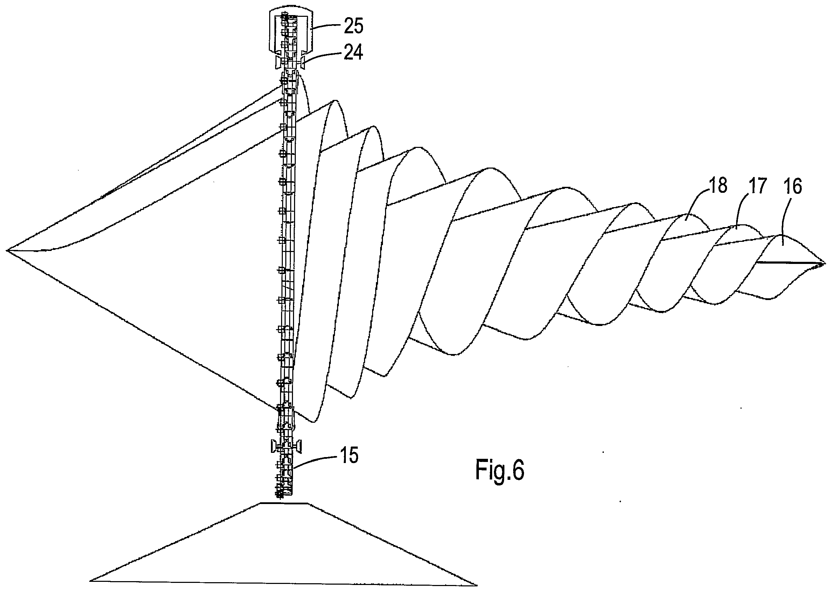

In this preferred embodiment of figures 5-8 a power generating unit is arranged inside the housing of outer ring 14. This annular dynamo is formed on the one hand by components 22 on the inner ring forming part of the rotor, which components for instance comprise permanent magnets, and is formed on the other by an array of stators which are arranged in the outer ring for the purpose of generating an electric current, and thereby electrical energy, under the influence of a variable magnetic field of elements 22 generated by the rotation. The operation of this dynamo is further explained below.

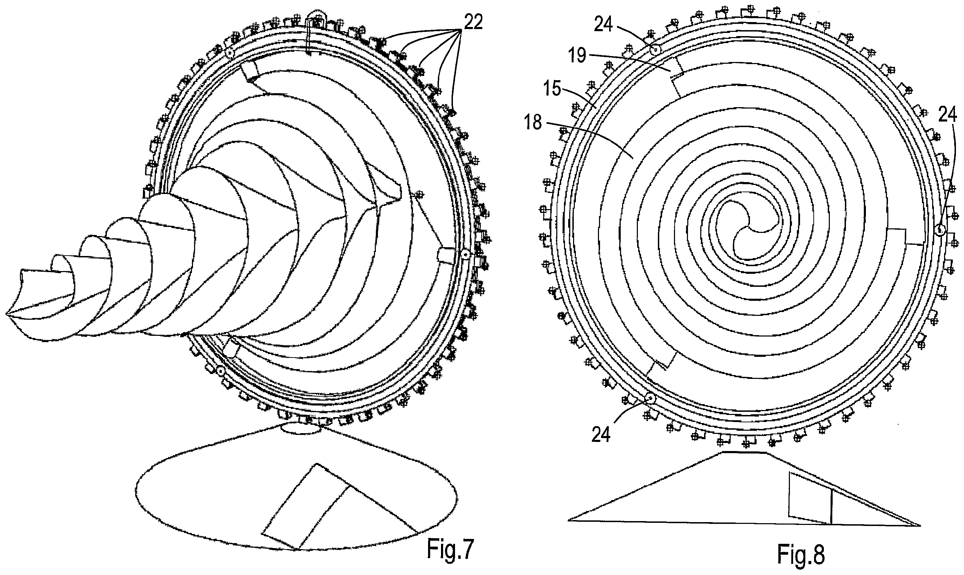

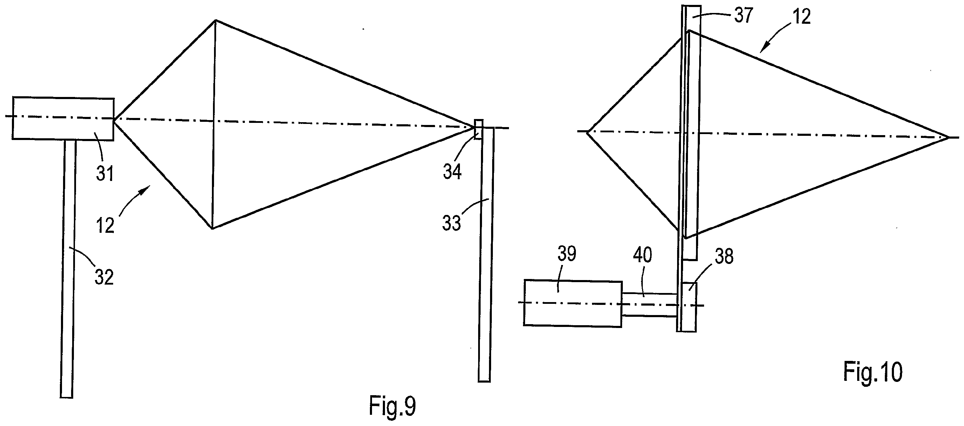

The inner ring is bearing mounted relative to the outer ring by means of wheels 24, which support against a support body 25 of outer ring 14. This support body also houses the different components of the dynamo. This is shown in front view without the outer ring in figure 8. Wheels 24 are arranged here close to fixing rods 19, which serve as fixing of vane blades 16-18 on inner ring 15. Although the fixing of the blades to the generator is carried out in the above described preferred embodiment by means of an inner ring which encloses the blades at their widest point, an arrangement is shown in the embodiment of figure 9 in which blade unit 12 is mounted between a front bearing 34, which is supported by a front support, and a rear bearing which is incorporated in a generator unit 31. Such a generator unit is constructed in a manner which is analogous to that of a known wind turbine. Generator unit 31 supports on a generator support 32.

In a further preferred embodiment (fig. 10) blade unit 12 is likewise mounted on ring 37 encircling the blade unit, in this case comprising a possibility for driving an external generator 39. It is possible here to envisage a standard gear transmission from ring 37, via a gear 38 and a transmission shaft 40. In the latter two embodiments the blade unit is similar to that of previous embodiments, although the manner in which the energy is taken off corresponds more to known forms of wind turbine.

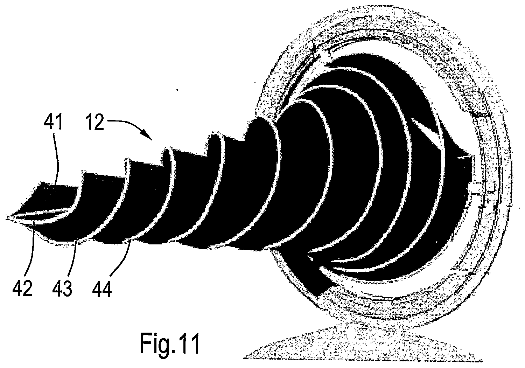

In the embodiment of figure 11 the vane blades are not per se self-supporting, but a rigid central axis 41 is provided which forms substantially a straight line within the blade unit. Three support spirals, which follow a curve substantially similar to edge 1 of the above described blades, extend in spiral form around central axis 41. These support spirals serve to provide a support to vane blades which are not rigid per se, i.e. for instance film material which is fixed between central axis 41 and spiral-shaped edge supports 42, 43, 44. Apart from this alternative construction, the vane blade unit has a construction similar to the embodiment of figure 5.

Several further alternative exemplary embodiments are referred to hereinbelow on the basis of the structural measures described above in the preferred embodiments. In the different embodiments the blade unit can be embodied by means of a ring suspension, for instance by means of wheels or ball bearings. The front side close to point 4 and the rear side close to point 2 can here be embodied without support as well as being provided with a support. As wind turbine, the point 4 is arranged in the direction of the wind. A self-orienting capacity is also achieved by the present construction, whereby the "nose" of the device will orient itself toward the wind if the wind changes. Further achieved is that the power of the device will not decrease, even when the wind direction changes within a certain margin of at least 20°, and will even increase.

This invention further relates to a rotating machine, both of driven and driving type, which can be used as for instance a pump, compressor, generator, drive motor, wind or water turbine and so forth. The machine is not of the positive displacement type. A rotating machine of the positive displacement type is for instance a piston pump. The machine is intended for interaction with a fluid medium such as a gas or liquid.

The medium flows through and/or around the machine.

At the moment a machine driven by wind or water or other liquid or gaseous medium, for instance for generating galvanic or other energy, is deemed an important application of the invention. It must however be apparent that the invention can be applied in any conceivable field, for instance as propulsion for an air or water vehicle.

This machine has many advantages, including being bird-friendly and having a high energy efficiency.

The machine comprises a rotor with which energy is extracted (such as for instance with a wind turbine) from or relinquished (such as for instance in a compressor or pump) to the fluid medium. For this purpose the rotor has one or more blades (or is formed thereby) which interact with the medium and around which the medium for instance flows, and is rotatable around a fixed centre point through which the preferably straight (optionally physical) rotor axis runs.

The rotor is preferably coupled drivingly to an energy take-off device such as a generator or an energy supplying device such as a drive motor.

The blade makes at least a single, more preferably more than two or more than 2.5 rotations around the rotor axis. Along a part of its length the edge of an outer end of the blade preferably maintains a distance to the rotor axis.

Going along the rotor axis the outer diameter of the blade increases continuously up to a maximum. Seen in side view, the blade preferably has a substantially funnel-shaped, cone-shaped or tapering outer end. The end with cone shape and/or greater diameter is preferably situated on the downstream side of the fluid medium.

The blade preferably has a substantially smooth and/or continuous form.

When applied as wind turbine the blade substantially fully captures the wind flowing in substantially parallel to the rotor axis and allows it to escape laterally (relative to the rotor axis) at its downstream funnel-shaped end, for instance along the end maintaining a distance from the rotor axis.

The rotor preferably comprises two, three or more of these blades, which are preferably nested in each other and preferably have substantially equal angular distances relative to each other around the rotor axis. The rotor preferably comprises only these blades.

These blades are preferably relatively thin compared to their length and width. They have for instance the form of a membrane, sheet or plate. They can be made from any suitable material, for instance metal or plastic or composite. Envisaged at the moment is a layered material of alternately metal plate and layers of fibre-reinforced resin, for instance of the type known under the brand name GLARE (many thin aluminium plates interleaved with glass fibre-reinforced resin of construction quality, for instance epoxy).

In the three-dimensional form of the blade in figure 3, the distance between points 2 and 4 amounts to about 1.5 times the diameter of the circle described by side edge 1, while point 5 is situated on a radial line from the rotor axis through point 6, wherein points 5 and 6 maintain a gap so that the funnel-shaped end forms a substantially tangential outflow gap running along the end edge 7, which has remained substantially straight.

The present invention is described in the foregoing on the basis of several preferred embodiments. Different aspects of different embodiments are deemed described in combination with each other, wherein all combinations which can be made by a skilled person on the basis of this document should be included. These preferred embodiments are not limitative for the scope of protection of this text. The scope of the invention is defined in the appended claims.

## Claims

1. Rotor blade unit (12), comprising at least a rotor blade or vane (10,16,17,18) with a radially inner edge (3) and a radially outer edge (1) for realizing an energy conversion with a fluid medium, wherein
- the radially outer edge (1) of the blade is spiral-shaped around a straight central rotor axis (13),
- the blade extends substantially along the central axis from the straight central rotor axis (13), **characterized in that**
- the rotor blade extends from the axis with the radially outer edge (1) of the rotor blade being arranged spiralling around the axis for at least a single rotation around the central axis, having the radially inner edge (3) fixed from a first end (2) to a second end (4) to the straight central rotor axis.

2. Rotor blade unit as claimed in claim 1, wherein each rotor blade (10,16,17,18) is membrane, sheet or plate-like.

3. Rotor blade unit as claimed in claim 1 or 2, comprising a number of rotor blades (10,16,17,18), preferably three, which are arranged together along a shared central axis at an equal mutual angular distance relative to this central axis, wherein the blades spiral into each other with the spiral form when assembled.

4. Fluid interaction device (11), such as a wind turbine, marine engine or pump, comprising a rotor blade unit as claimed in one or more of the foregoing claims, wherein the device comprises:
- a frame (20) for supporting the device,
- an energy converter coupled to the frame for converting energy,
- a coupling between the rotor blade and the frame for supporting the rotor blade.

5. Method for obtaining energy by means of a device as claimed in one or more of the foregoing claims, comprising steps for:
- providing the device,
- allowing the device to interact with a fluid.

## Patentansprüche

1. Rotorblatteinheit (12), umfassend wenigstens ein(e) Rotorblatt oder (10, 16, 17, 18) mit einer radialen Innenkante (3) und einer radialen Außenkante (1), um eine Energieumwandlung mit einem fluiden Medium zu realisieren, wobei
- die radiale Außenkante (1) des Blattes spiralförmig um eine gerade Rotor-Mittelachse (13) ist,
- das Blatt sich im Wesentlichen entlang der Mittelachse von der geraden Rotor-Mittelachse (13) erstreckt,
**dadurch gekennzeichnet, dass**
- das Rotorblatt sich von der Achse aus erstreckt, wobei die radiale Außenkante (1) des Rotorblatts spiralförmig um die Achse verlaufend angeordnet ist für wenigstens eine einzige Drehung um die Mittelachse, mit der radialen Innenkante (3) von einem ersten Ende (2) zu einem zweiten Ende (4) an die gerade Rotor-Mittelachse befestigt.

2. Rotorblatteinheit wie in Anspruch 1 beansprucht, wobei jedes Rotorblatt (10, 16, 17, 18) membran-, flächengebilde- oder plattenartig ist.

3. Rotorblatteinheit wie in Anspruch 1 oder 2 beansprucht, umfassend eine Reihe von Rotorblättern (10, 16, 17, 18), vorzugsweise drei, die zusammen entlang einer gemeinsamen Mittelachse in einem gleichen gegenseitigen Winkelabstand relativ zu dieser Mittelachse angeordnet sind, wobei die Blätter, wenn montiert, mit der Spiralform spiralig ineinander laufen.

4. Fluid-Interaktionsvorrichtung (11), wie z.B. eine Windturbine, ein Schiffsmotor oder eine Pumpe, umfassend eine Rotorblatteinheit wie in einem oder mehreren der obigen Ansprüche beansprucht, wobei die Vorrichtung umfasst:
- einen Rahmen (20) zum Stützen der Vorrichtung,
- einen Energieumwandler, der mit dem Rahmen gekoppelt ist, um Energie umzuwandeln,
- eine Kupplung zwischen dem Rotorblatt und dem Rahmen zum Stützen des Rotorblatts.

5. Verfahren zur Energiegewinnung mittels einer wie in einem oder mehreren der obigen Ansprüche beanspruchten Vorrichtung, umfassend die Schritte:
- Bereitstellen der Vorrichtung,
- Erlauben einer Wechselwirkung der Vorrichtung mit einem Fluid.

## Revendications

1. Unité de pales de rotor (12), comprenant au moins une pale ou aube de rotor (10,16,17,18) présentant un bord radialement interne (3) et un bord radialement externe (1) pour réaliser une conversion d'énergie avec un milieu fluide, dans laquelle :
- le bord radialement externe (1) de la pale est de forme hélicoïdale autour d'un axe de rotor central rectiligne (13),
- la pale s'étend sensiblement le long de l'axe central depuis l'axe de rotor central rectiligne (13), **caractérisée en ce que**
- la pale de rotor s'étend depuis l'axe avec le bord radialement externe (1) de la pale de rotor agencé de manière hélicoïdale autour de l'axe pour au moins une rotation unique autour de l'axe central, le bord radialement interne (3) étant fixé depuis une première extrémité (2) jusqu'à une seconde extrémité (4)à l'axe de rotor central rectiligne.

2. Unité de pales de rotor selon la revendication 1, dans laquelle chaque pale de rotor (10,16,17,18) est en forme de membrane, feuille ou plaque.

3. Unité de pales de rotor selon la revendication 1 ou 2, comprenant un nombre de pales de rotor (10,16,17,18), de préférence trois, lesquelles sont agencées ensemble le long d'un axe central partagé à une distance angulaire mutuelle égale relativement à cet axe central, dans laquelle les pales se déplacent de manière hélicoïdale les unes dans les autres dans la forme hélicoïdale lors de l'assemblage.

4. Dispositif d'interaction avec un fluide (11), tel qu'une éolienne, un moteur marin ou une pompe marine, comprenant une unité de pales de rotor selon l'une ou plusieurs des revendications précédentes, le dispositif comprenant :
- un châssis (20) pour supporter le dispositif,
- un convertisseur d'énergie couplé au châssis pour convertir une énergie,
- un accouplement entre la pale de rotor et le châssis pour supporter la pale de rotor.

5. Procédé d'obtention d'énergie au moyen d'un dispositif selon l'une ou plusieurs des revendications précédentes, comprenant des étapes pour :
- fournir le dispositif,
- permettre au dispositif d'interagir avec un fluide.
